# EUROPÄISCHE PATENTANMELDUNG

(11) **EP 3 875 786 A1**
(43) Veröffentlichungstag der Anmeldung: **08.09.2021**
(21) Anmeldenummer: 21160566.2
(22) Anmeldetag: 03.03.2021
(51) Int. Cl.: F16B 7/18

(54) **BAUSATZ ZUM AUFBAU EINER METALLKONSTRUKTION MIT MEHREREN VERBINDUNGSELEMENTEN**

(30) Priorität: 03.03.2020 DE 102020105714; 02.10.2020 DE 102020125888
(71) Anmelder: Stairway2 UG (haftungsbeschränkt), 68753 Waghäusel (DE)
(72) Erfinder: Blase, Heimrich, 68723 Schwetzingen (DE)
(74) Vertreter: Meyer, Niels Thorben

(57) **Zusammenfassung**

Bei einem Bausatz zum Aufbau einer Metallkonstruktion sind mehrere Verbindungselemente (1) vorgesehen, wobei die Verbindungslemente (1) mindestens ein Langloch (3) zur Durchführung mindestens eines Befestigungsmittels (2) aufweisen. Die Verbindungselemente (1) sind derart zueinander anordbar, dass ein Befestigungsmittel (2) durch mindestens zwei Langlöcher (3) zweier Verbindungselemente (1) ragt.

## Beschreibung

Die Erfindung betrifft einen Bausatz, mit dem eine Metallkonstruktion bildbar ist.

Es sind Tragsysteme bekannt, die aus mehreren Teilen zusammengebaut werden können. In der Regel sind solche Tragsysteme derart konstruiert, dass zum Beispiel Schienen mittels Befestigungsmittel miteinander verbindbar sind und so ein schienen- oder rinnenförmiges Tragsystem bildbar ist.

Ähnliches gilt für Regalsysteme, die aus mehreren Seitenteilen bestehen, die zum Beispiel Regalbretter tragen. Die Seitenteile sind durch ein Grundgerüst miteinander verbunden, das wiederum durch die Seitenteile stabilisiert wird. Eine Rückwand kann optional mit dem Grundgerüst verbunden sein.

Ein System zum Aufbau einer Treppe bestehend aus einzelnen Bauteilen, die miteinander verbindbar sind, ist aus DE 35 05 688 A1 bekannt. Ein ähnlicher Gegenstand geht aus EP 2 261 439 A2 hervor.

Nachteilig bei den bekannten Systemen ist, dass es sich hierbei um spezielle Systeme handelt, die nicht universell einsetzbar sind. Das heißt, das Regal kann nicht auch als schienenförmiges Führungssystem zum Führen und Tragen eines Rohes dienen. Außerdem sind die Bauteile der bekannten Systeme aufgrund ihrer Ausgestaltung nur begrenzt einsetzbar.

Der Erfindung liegt die Aufgabe zugrunde, eine universell einsetzbare und wandelfähige Metallkonstruktion bereitzustellen.

Die Aufgabe wird erfindungsgemäß dadurch gelöst, dass ein Bausatz zum Aufbau einer Metallkonstruktion mit mehreren Verbindungselementen, wobei die Verbindungselemente mindestens ein Langloch zur Durchführung mindestens eines Befestigungsmittels aufweisen, wobei sich das Langloch koaxial wenigstens über ein Drittel der Länge des Verbindungselementes erstreckt und die Verbindungselemente derart zueinander anordbar sind, dass ein Befestigungsmittel durch mindestens zwei Langlöcher zweier Verbindungselemente ragt, so dass die Metallkonstruktion errichtbar ist. Hierdurch kann insbesondere eine Metallkonstruktion zum Führen oder Tragen eines Objekts gebildet werden. In einer bevorzugten Ausgestaltung ist vorgesehen, dass der Bausatz zumindest drei unterschiedlich gestaltete Verbindungselemente umfasst. Es hat sich gezeigt, dass mit einem derartigen Bausatz verschiedenartige Metallkonstruktionen errichtbar sind. Vorteilhafterweise können die mindestens drei verschiedenartig gestalteten Verbindungselemente in unterschiedlicher Anzahl im Bausatz vorliegen.

Ein wesentlicher Vorteil der Erfindung ist, dass durch die vielfältigen Kombinationsmöglichkeiten verschiedenartige Metallkonstruktionen in einfacher Weise errichtbar sind, die aber auch wieder zerlegt und anderweitig aufgebaut werden können. Es handelt sich also um eine nachhaltige Erfindung, aus der unterschiedliche Konstruktionen einfach errichtbar sind. Außerdem kann die Erfindung einfach transportiert werden und ist günstig in der Herstellung. Insbesondere die Gestaltung der Verbindungselemente mit mindestens einem Langloch ist universell einsetzbar, da durch die Anordnung des Langlochs die Position des Befestigungsmittels über einen großen Bereich des Verbindungselementes verschiebbar ist, so dass das Verbindungselement verschiedenartig positionierbar und somit einsetzbar ist. Als vorteilhaft hat sich herausgestellt, wenn das Langloch koaxial wenigstens über ein Drittel der Länge des Verbindungselementes verläuft. In einer bevorzugten Ausgestaltung ist ein Bausatz zum Aufbau einer Metallkonstruktion mit mehreren Verbindungselementen vorgesehen, wobei die Verbindungselemente mindestens ein Langloch zur Durchführung mindestens eines Befestigungsmittels aufweisen, wobei sich das Langloch koaxial wenigstens über die Hälfte, insbesondere über zwei Drittel der Länge des Verbindungselementes erstreckt und die Verbindungselemente derart zueinander anordbar sind, dass ein Befestigungsmittel durch mindestens zwei Langlöcher zweier Verbindungselemente ragt, so dass die Metallkonstruktion errichtbar ist.

Die aus den Verbindungselementen gebildete Metallkonstruktion wird im Sinne der Erfindung auch als System bezeichnet. Die Verbindungselemente werden im Sinne der Erfindung auch als Bauteile bezeichnet.

Das System kann zu einem Regal, einer Schiene, einem Tisch, einem Carport, einem Träger, Möbelstücken, einem Balkon, einem Stützsystem, einem Balken, eine Treppe, einer Brücke, einem Gerüst, einem Baugerüst, einem Stahlmast, einem Hochmast, Messeaufbauten, Vorstellbalkone, Rampen, Rampenauffahrten, Radabweiser, Wandunterstützer, Scharniere, Stühle, Unterkonstruktion für Maschinen, Servierwagen, Waschtisch, Tür- und Fenstertragsystem oder dergleichen gebildet werden, die Objekte indirekt oder direkt führen, schützen oder tragen. Das Führen bezeichnet im Sinne der Erfindung das Tragen bzw. Führen eines Objekts über eine Strecke. Dies kann beispielsweise ein Rohr sein, das von dem Tragsystem streckenweise getragen bzw. geführt wird. Wird das System als Tragsystem verwendet, kann es beispielsweise als Tisch ausgestaltet sein. Das System erfüllt die Stütz-, Trag- oder Führaufgabe indirekt oder direkt. Das heißt insbesondere, dass das Objekt direkt oder indirekt mit dem System in Wirkkontakt bringbar ist. Ist das System z. B. als Tisch ausgebildet, kann das System neben den Tischbeinen auch die Auflage für eine Tischplatte bilden, wobei die das Objekt berührende Tischplatte wiederum nicht zwangsläufig Bestandteil des Systems sein muss, aber sein kann. Ein System zum Stützen kann beispielsweise ein Pfosten oder ein Träger sein. Des Weiteren kann es zum Beispiel im Fall einer Ausgestaltung als Rampe lediglich temporär ein Objekt stützen oder führen.

Die Verbindungselemente können unterschiedliche Längen aufweisen, so dass sich unterschiedliche lange Flächen bilden lassen, indem die Verbindungselemente einfach über die Langlöcher miteinander verbunden werden. Hierbei durchragt ein Befestigungsmittel, wie beispielsweise eine Schraube zwei Verbindungselemente, die im Wesentlichen derart zueinander angeordnet sind, dass das Befestigungsmittel beide Langlöcher durchragen kann. Hierbei müssen die Langlöcher nicht deckungsgleich übereinander liegen. Vielmehr ist eine bereichsweise Überlappung der Langlöcher ausreichend, so dass das Befestigungsmittel hindurchragen kann. Aufgrund der erfindungsgemäßen Gestaltung und Länge der Langlöcher können die Verbindungselemente in unterschiedlichen Winkeln zueinander und versetzt zueinander befestigt werden.

Es ist insbesondere vorteilhaft, wenn die Verbindungselemente zumindest teilweise, insbesondere bereichsweise eine rechteckige Form mit mindestens einem im Wesentlichen koaxial zu einer Längsachse der Verbindungselemente verlaufendem Langloch aufweisen. Das Langloch kann vorteilhafterweise entlang der Längsachse eines Verbindungselementes verlaufen. Die Länge und Breite des Langlochs kann bei den Verbindungselementen variieren und unterschiedlich gestaltet sein. So können Verbindungselemente mit kürzeren und Verbindungselemente mit längeren Langlöchern bereitgestellt werden. Hierdurch können verschiedenartige Flächen durch Kombination verschiedenartiger Verbindungselemente gebildet werden.

Ein Verbindungselement weist mindestens ein Langloch auf. Es kann jedoch auch vorteilhaft sein, wenn die Verbindungselemente eine rechteckige Form mit mindestens zwei hintereinander im Wesentlichen mittig vorliegenden separaten Langlöchern aufweisen. Hierdurch ist ein Verbindungselement mit z. B. zwei separaten Verbindungselementen über die beiden Langlöcher verbindbar.

Es kann auch vorgesehen sein, dass die Verbindungselemente zwei Arme umfassen, die in einem rechten Winkel zueinanderstehen, so dass die Längsachsen der Arme in einem Winkel von 90° zueinanderstehen, wobei die insbesondere flächig ausgebildeten Arme in einer Ebene liegen. Die beiden Arme der Verbindungselemente, die in einem rechten Winkel zueinanderstehen, weisen vorteilhafterweise jeweils mindestens ein Langloch auf, wobei die Längsachsen der Langlöcher in einem Winkel von 90° zueinanderstehen. Hierdurch ist je ein Arm mit einem anderen Verbindungselement verbindbar.

Es kann jedoch auch vorteilhaft sein, wenn die Verbindungselemente aus zwei Armen bestehen, die in einem Winkel zueinanderstehen, der über oder unter 90° liegt, wobei die insbesondere flächig ausgebildeten Arme in einer Ebene liegen. Das heißt, die Längsachsen der Arme stehen insbesondere in einem Winkel zueinander, der über oder unter 90° liegt. Je nach Anwendung können die Arme in einem unter 90° oder in einem über 90° liegendem Winkel zueinander ausgerichtet sein, wobei vorteilhafterweise in jedem Arm mindestens ein Langloch vorliegt, über das die Arme mit weiteren Verbindungselementen verbindbar sind.

Die Verbindungselemente können in einer Ausgestaltung aus Metall bestehen. Metall weist für das Tragen und Führen eines Objektes die notwendigen physikalischen Eigenschaften auf. Als Metall kann beispielsweise ein Stahl verwendet werden. Es können jedoch auch faserverstärkte Kunststoffe verwendet oder mit einem Metall kombiniert werden.

Die Form der Verbindungselemente kann unterschiedlich gestaltet sein. So können die Verbindungselemente viereckig, rechteckig, mehreckig, quadratisch oder rund sein. Bevorzugt ist es, wenn die Verbindungselemente eben oder geknickt ausgestaltet sind. Gerade bei Verbindungselementen mit zwei Armen kann es vorteilhaft sein, wenn die Arme gewinkelt zueinander ausgerichtet sind, so dass deren Längsachsen in voneinander verschiedenen Ebenen liegen. Hierbei kann es vorteilhaft sein, dass bei der geknickten Ausgestaltung zwei Flächen in einem Winkel von 90° zueinanderstehen. Es kann jedoch auch vorteilhaft sein, dass bei der geknickten Ausgestaltung zwei Flächen in einem Winkel von mehr oder weniger als 90° zueinanderstehen.

Es ist bevorzugt, den Bausatz zur Bildung einer Metallkonstruktion zu verwenden, die im Sinne der Erfindung auch als System bezeichnet wird.

Ein erfindungsgemäßes Bauteil, bzw. Verbindungselement ist insbesondere ein ebenes Metallteil, in dem wenigstens ein Langloch vorliegt. Das Bauteil kann insbesondere wenigstens ein weiteres Metallteil mit einem Langloch und/oder einem Durchbruch aufweisen. Ferner kann das weitere Metallteil vorteilhafterweise in einer Ebene vorliegen, die zur Ebene, in der das erste Metallteil liegt, gewinkelt ist. Außerdem kann das weitere Metallteil insbesondere in der gleichen Ebene wie das erste Metallteil vorliegen. Die Metallteile können insbesondere auch als Arme eines mehrgliedrigen Bauteils ausgestaltet sein. Die Arme können außerdem vorteilhafterweise in die gleiche oder entgegensetzte Richtungen zueinander zeigen. Ferner können die Arme insbesondere in der gleichen oder in unterschiedlichen Ebenen vorliegen.

Die Erfindung wird nachfolgend anhand von Ausführungsbeispielen der Erfindung näher erläutert, die in der Zeichnung dargestellt sind. Es zeigen
- Figur 1: perspektivische Ansicht einer Ausgestaltung eines gewinkelten Verbindungselements,
- Figur 2: perspektivische Ansicht einer weiteren Ausgestaltung eines gewinkelten Verbindungselements,
- Figur 3: perspektivische Ansicht einer weiteren Ausgestaltung eines gewinkelten Verbindungselements,
- Figur 4: perspektivische Ansicht einer weiteren Ausgestaltung eines gewinkelten Verbindungselements mit Wandelement,
- Figur 5: perspektivische Ansicht einer weiteren Ausgestaltung eines gewinkelten Verbindungselements,
- Figur 6: perspektivische Ansicht einer weiteren Ausgestaltung eines gewinkelten Verbindungselements,
- Figur 7: perspektivische Ansicht einer weiteren Ausgestaltung eines gewinkelten Verbindungselements,
- Figur 8: perspektivische Ansicht einer Ausgestaltung eines geknickten Verbindungselements,
- Figur 9: perspektivische Ansicht einer weiteren Ausgestaltung eines gewinkelten Verbindungselements mit vier Langlöchern,
- Figur 10: perspektivische Ansicht einer weiteren Ausgestaltung eines gewinkelten Verbindungselements mit vier Langlöchern,
- Figur 11: eine Draufsicht einer Ausgestaltung eines Verbindungsteils mit zwei Langlöchern,
- Figur 12: eine perspektivische Ansicht einer weiteren Ausgestaltung eines gewinkelten Verbindungselements mit zwei Langlöchern
- Figuren 13-69: weitere perspektivische Ansichten weitere Verbindungselemente und
- Figuren 70-86: beispielhafte Verwendungen oder Metallkonstruktionen des Bausatzes bzw. der Verbindungselemente bzw. der Bauteile.

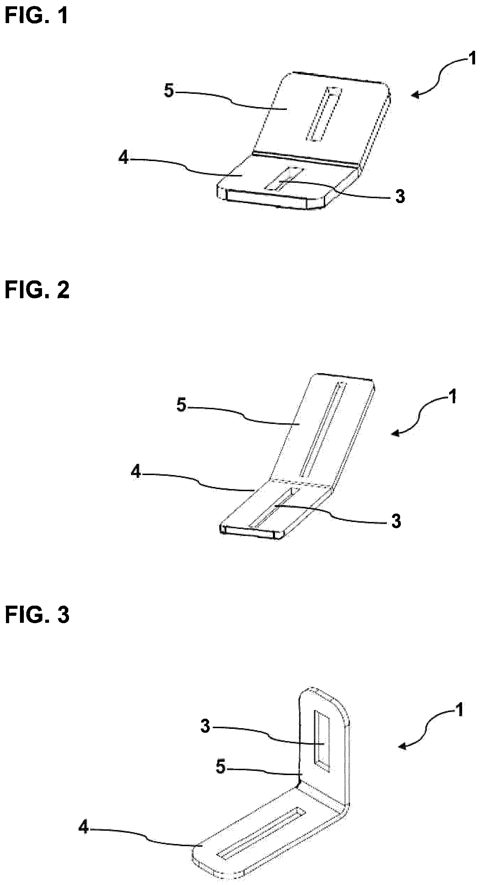

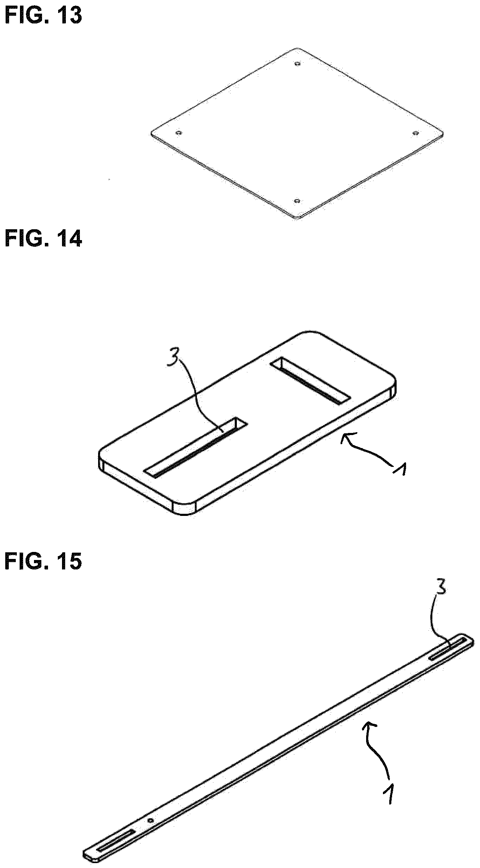

In den Figuren 1 bis 12 sind bevorzugte Ausgestaltungen von Verbindungselementen dargestellt. Der Bausatz zum Aufbau einer Metallkonstruktion, insbesondere zum Tragen und Führen eines Objektes umfasst mehrere Verbindungselemente 1, die über in Figur 13 gezeigte Befestigungsmittel 2 miteinander verbunden sind. Die Verbindungselemente 1 sind vorzugsweise als länglich gestaltete flache Rechtecke ausgeführt, wobei Verbindungselemente 1 auch mehrere ebene Metallteile umfassen können. Die Verbindungselemente 1 können jedoch vollständig oder bereichsweise auch andere geometrische Formen aufweisen. So kann beispielsweise ein Ende eines Verbindungselementes 1 spitzzulaufend oder abgerundet gestaltet sein. Die Höhe der Verbindungselemente 1 kann beispielsweise im Bereich von 0,5 cm bis 5 cm liegen oder mehr oder weniger. Die Höhe und/oder auch Breite der Verbindungselemente 1 kann über ihre Länge variieren, das heißt, die Höhe und/oder Breite kann über die Länge abnehmen oder zunehmen.

Jedes Verbindungselement 1 umfasst mindestens ein Langloch 3, das entlang der Längsachse der Verbindungselemente 1 verläuft. Die Länge des Langlochs 3 kann zwischen den Verbindungselementen 1 variieren, wobei sich die Langlöcher 3 insbesondere über ein Drittel der Länge eines Verbindungselementes 1 erstrecken. Die Langlöcher 3 der Verbindungselemente 1 können unterschiedliche Längen und/oder Breiten aufweisen. Das Langloch 3 kann entgratete Enden umfassen, so dass das Langloch 3 keine Ecken aufweist. Enden mit Ecken können jedoch auch vorteilhaft sein.

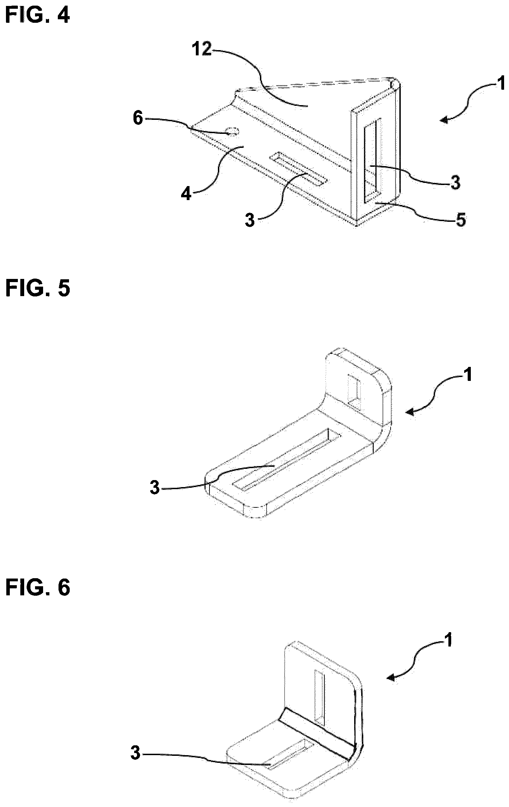

Die Verbindungselemente 1 können zwei- oder mehrarmig ausgestaltet sein, wobei in jedem Arm 4, 5, der durch ein Metallteil gebildet wird, wenigstens ein Langloch 3 angeordnet sein kann. Die Arme 4, 5 können derart zueinander angeordnet sein, dass sie in einem Winkel von 90° oder mehr oder weniger als 90° zueinanderstehen. Hierbei liegen die Längsachsen der Arme 4, 5 vorzugsweise in einer senkrecht zur Fläche der Verbindungselemente 1 verlaufenden Ebene. Die Langlöcher 3 der Arme 4, 5 verlaufen insbesondere koaxial entlang der Längsachsen der Arme 4, 5. Die Länge und Breite der Langlöcher 3 der Arme 4, 5 eines Verbindungselementes1 kann unterschiedlich sein, wie beispielsweise in den Figuren 3 und 5 zu erkennen ist. Bei dieser Ausgestaltung sind die Arme 4, 5 über die Schmalseite eines Verbindungselementes 1 verbunden.

In Figur 4 ist eine Ausgestaltung eines Verbindungselements 1 gezeigt, bei dem zwischen den Armen 4, 5 ein Wandelement 12 integriert ist.

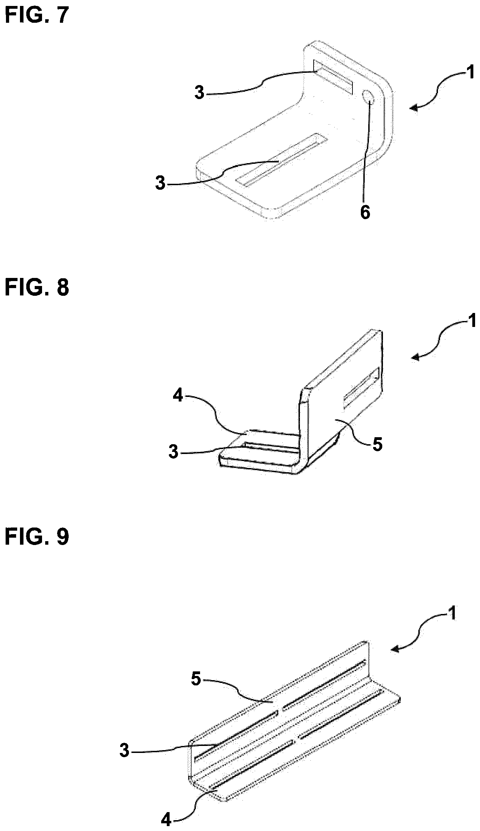

In einer weiteren Ausgestaltung, die in den Figuren 7 und 8 beispielhaft dargestellt ist, sind die Langlöcher 3 der Arme 4, 5 nicht in einer Ebene angeordnet, sondern ein Langloch 3 eines Arms 4, 5 ist im Wesentlichen quer zum Langloch 3 des anderen Arms 4, 5 angeordnet. Je nach Ausgestaltung kann somit, wie gut in Figur 8 erkennbar, ein erster Arm 4 des Verbindungselementes 1 länger vorgesehen sein, wie der zweite Arm 5. Der zweite Arm 5 ist zum ersten Arm 4 geknickt angeordnet.

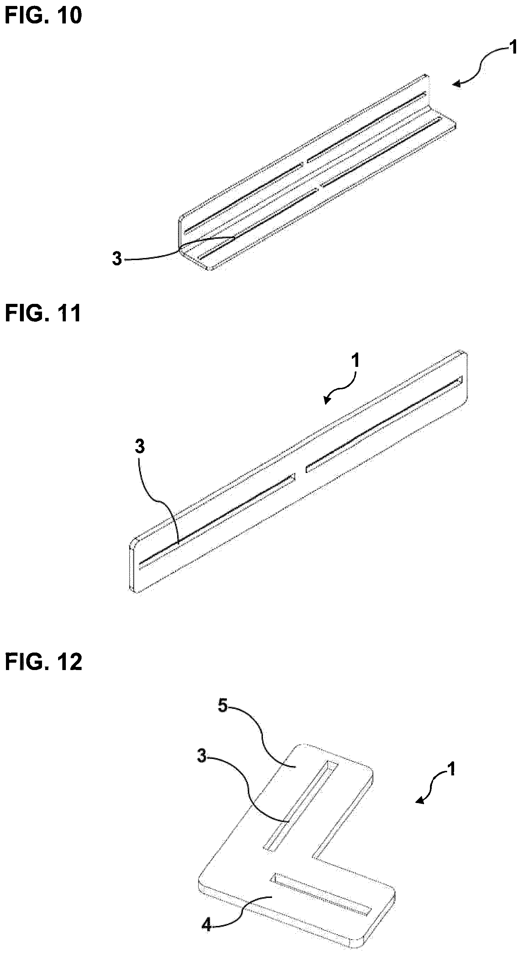

Eine weitere Ausgestaltung ist in den Figuren 9 und 10 gezeigt, bei der das Verbindungselement 1 ebenfalls zwei Arme 4, 5 aufweist, die jedoch über die Längsseite des Verbindungselementes 1 verbunden und zueinander in einem 90° Winkel angeordnet sind. Die dargestellten Arme 4, 5 weisen jeweils zwei Langlöcher 3 auf, deren Längsachsen quasi parallel verlaufen.

Es kann vorgesehen sein, dass die Verbindungselemente 1 neben mindestens einem Langloch 3 weitere Bohrungen 6 zur Aufnahme von Befestigungsmitteln aufweisen, was beispielhaft in den Figuren 4 und 7 angedeutet ist. Hierdurch sind weitere oder stabilere Verbindungen möglich. Denn durch die Bohrung 6 kann ebenfalls ein Befestigungsmittel durchgeführt werden, so dass zwei Verbindungselemente 1 verbindbar sind.

Figur 11 zeigt ein langgestrecktes, ebenes Verbindungselement 1 mit zwei hintereinander angeordneten Langlöchern 3. Ein gewinkeltes Verbindungselement 1 ist in Figur 12 dargestellt, bei dem das Verbindungselement 1 im Wesentlichen aus zwei Armen 4, 5 besteht, die in einem 90° Winkel zueinander angeordnet sind, wobei in jedem Arm 4, 5 jeweils ein Langloch 3 vorliegt. Das heißt, die Langlöcher 3 liegen in einer Ebene und die Längsachsen der Langlöcher stehen senkrecht zueinander.

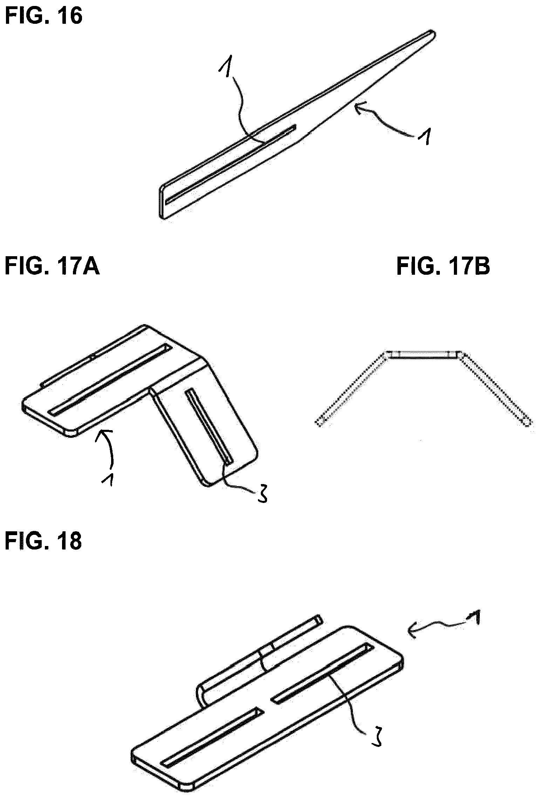

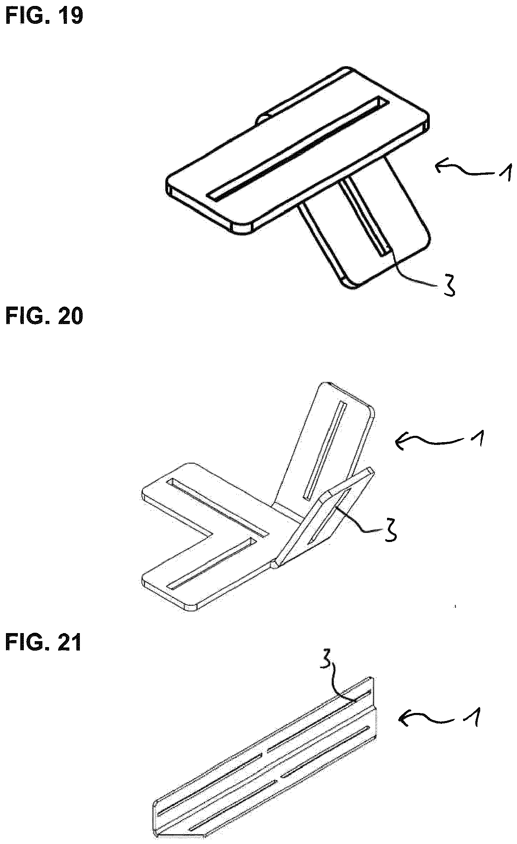

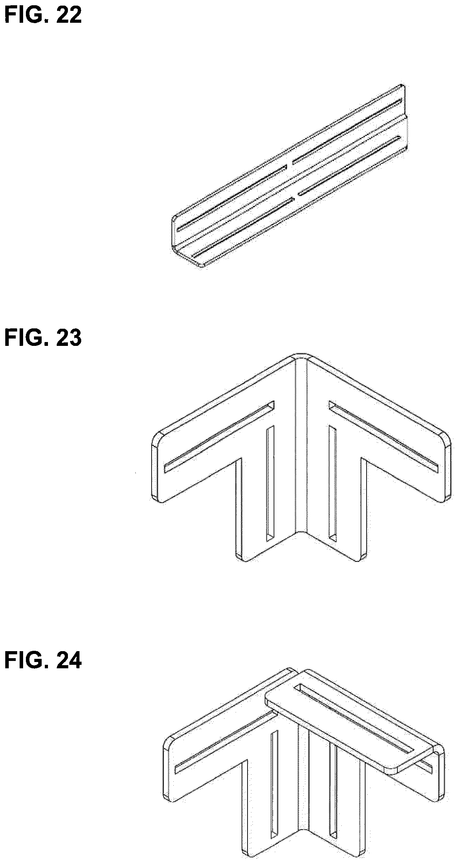

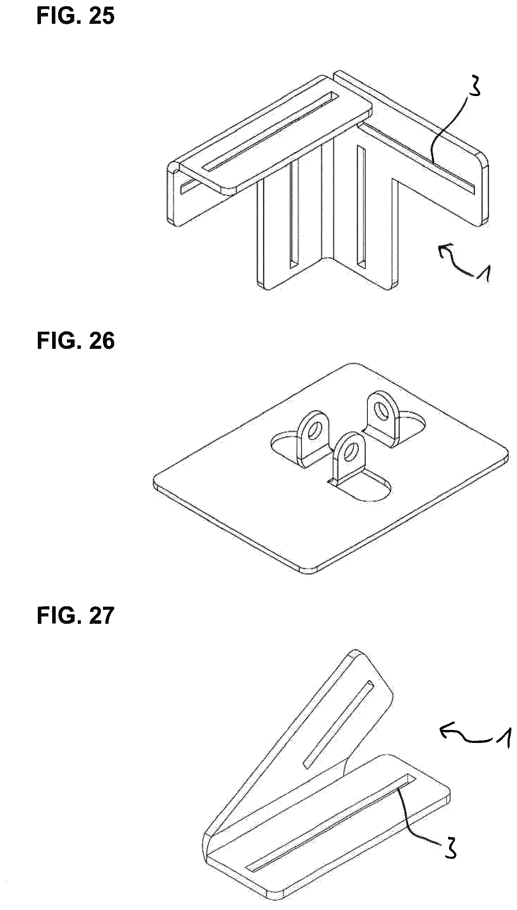

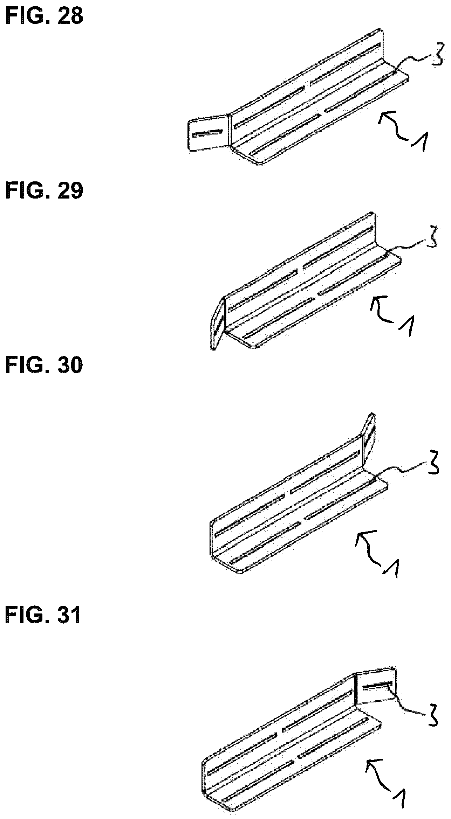

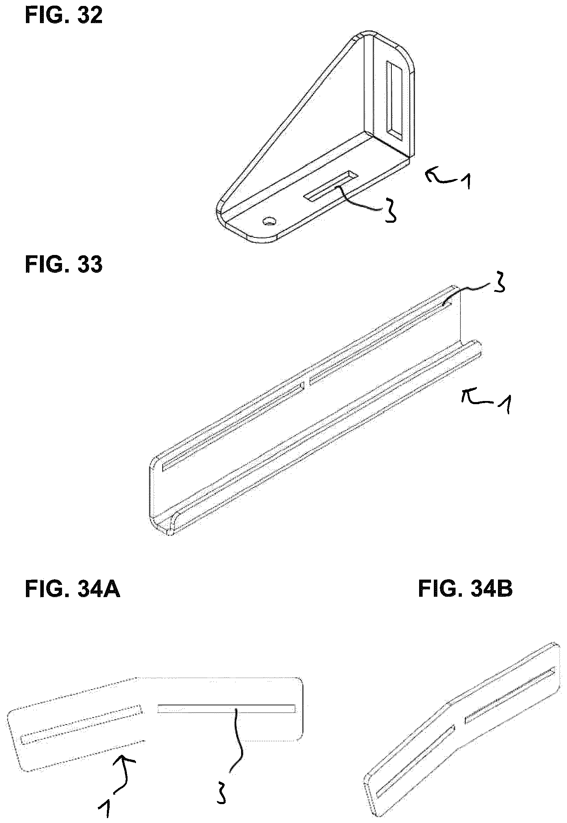

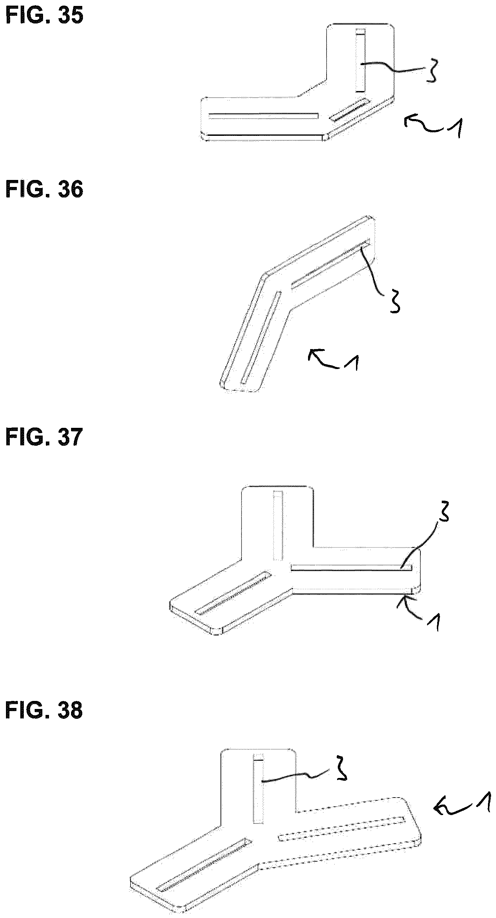

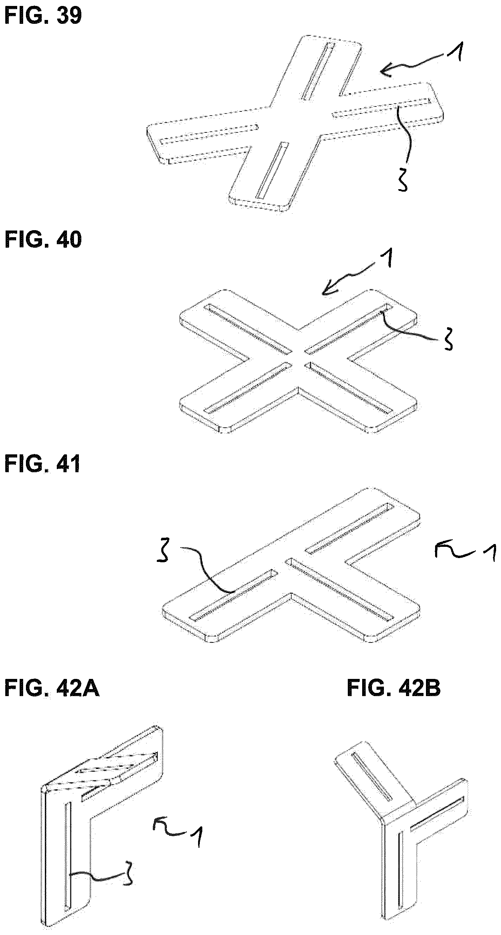

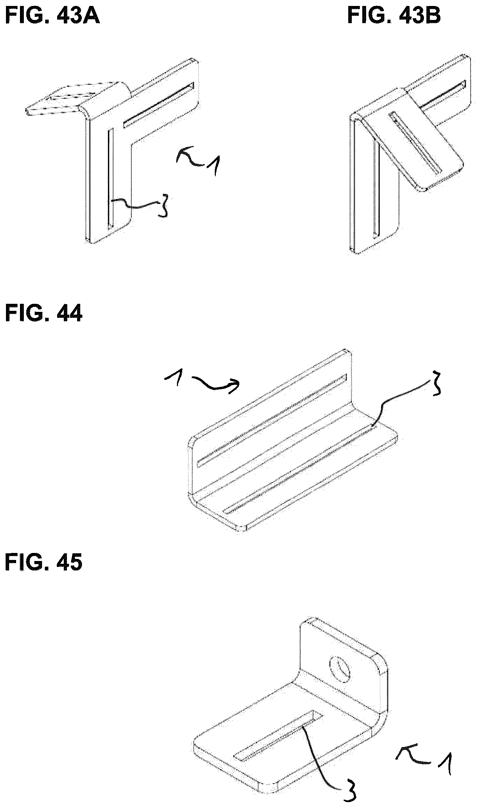

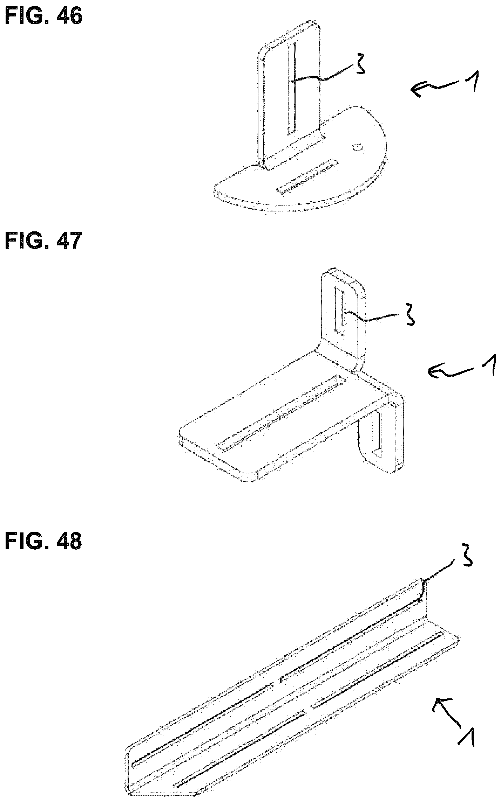

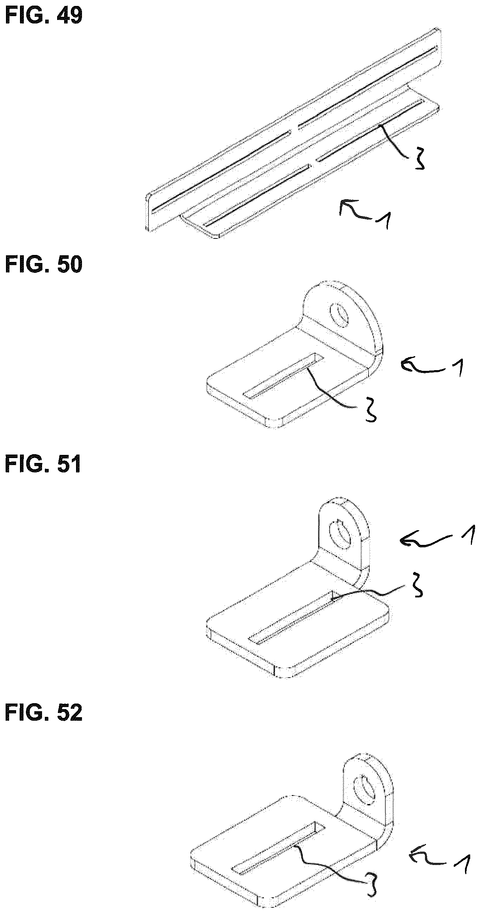

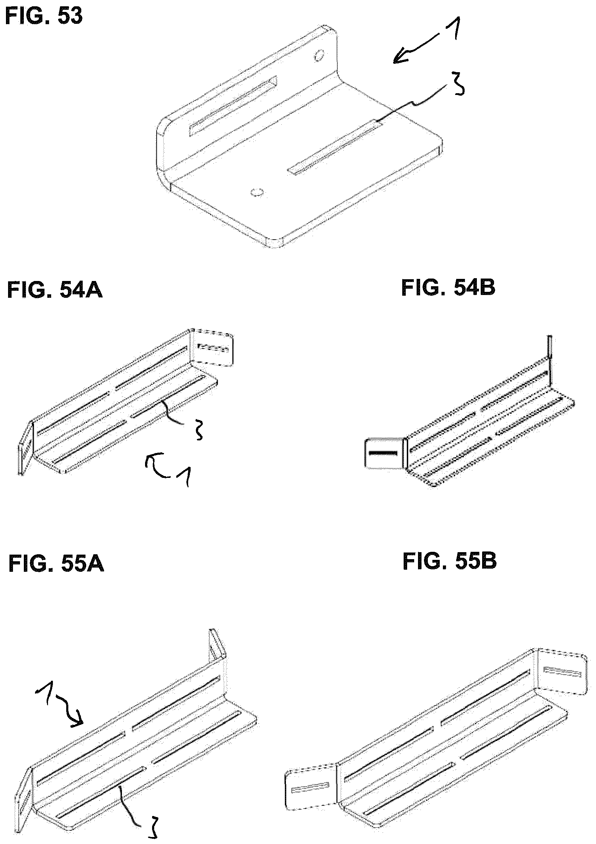

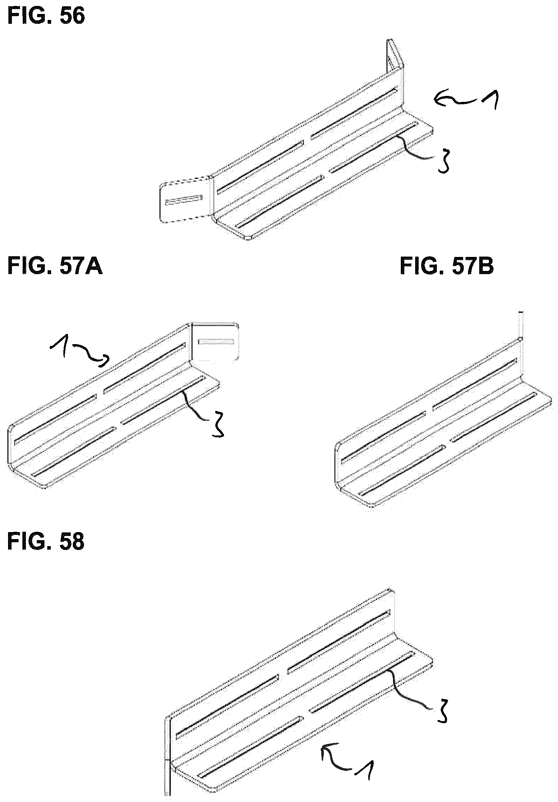

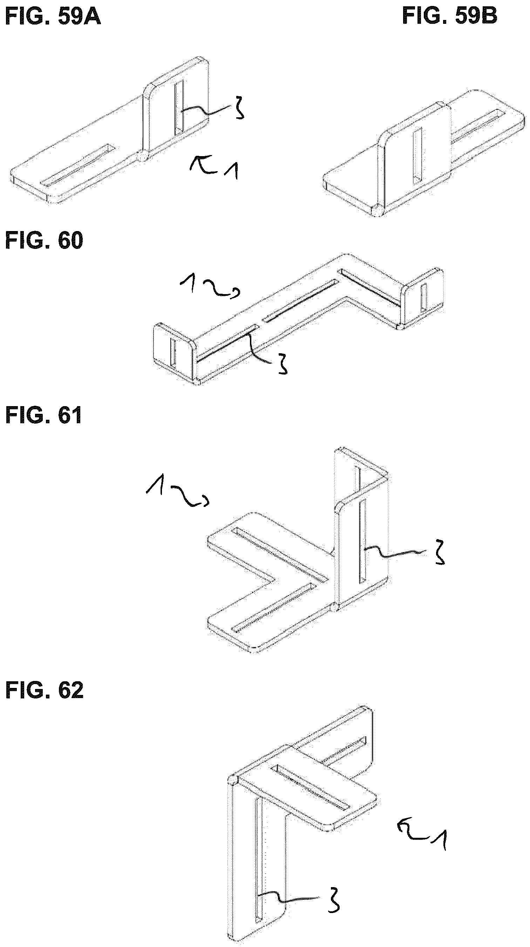

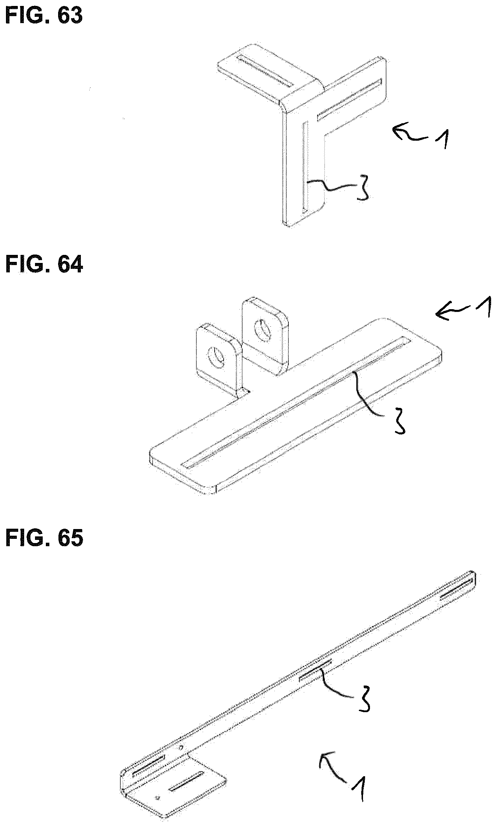

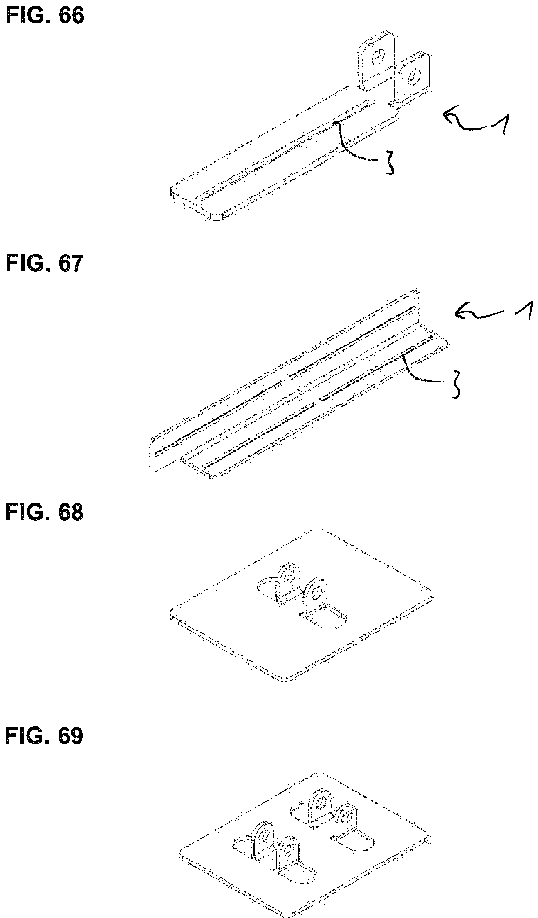

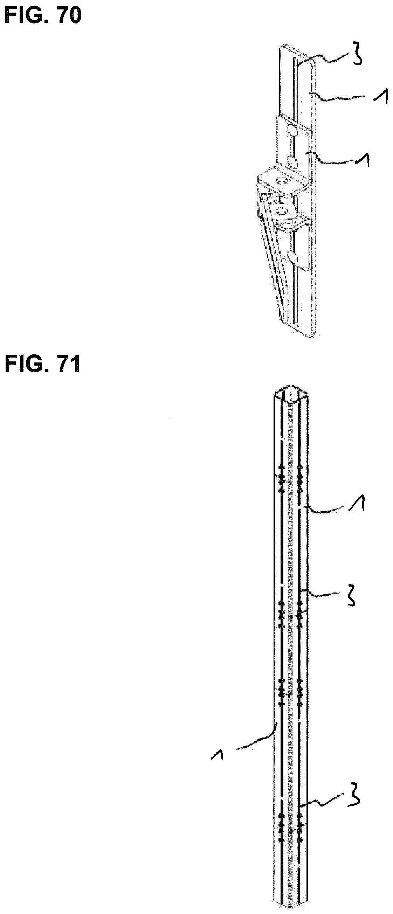

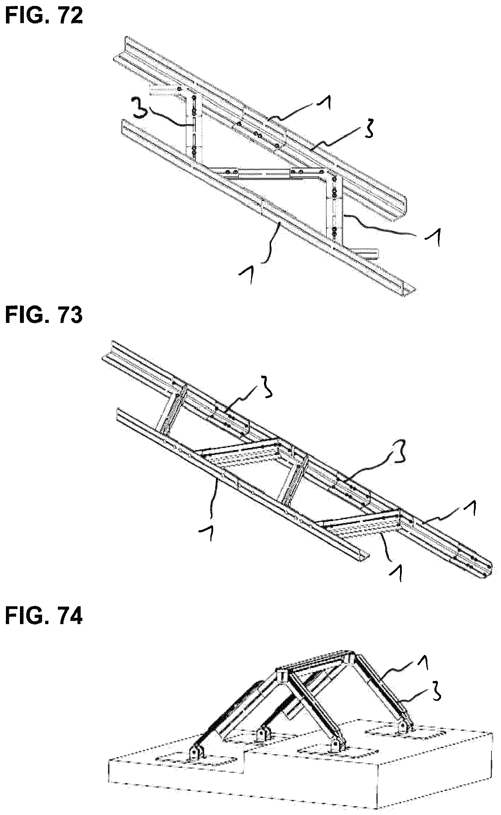

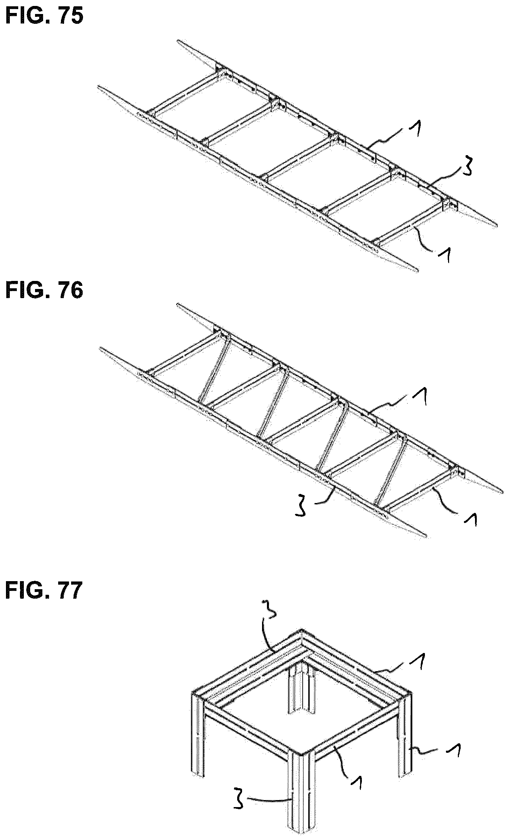

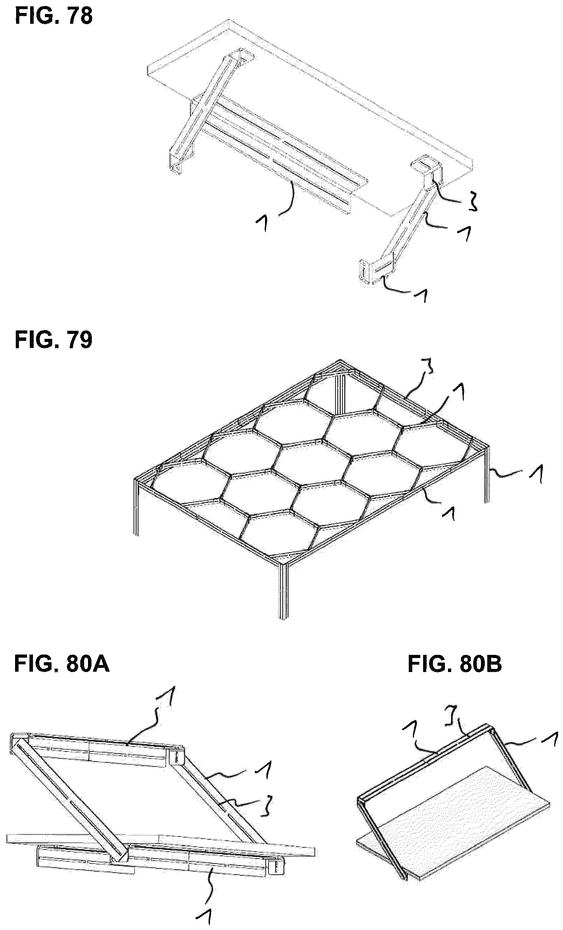

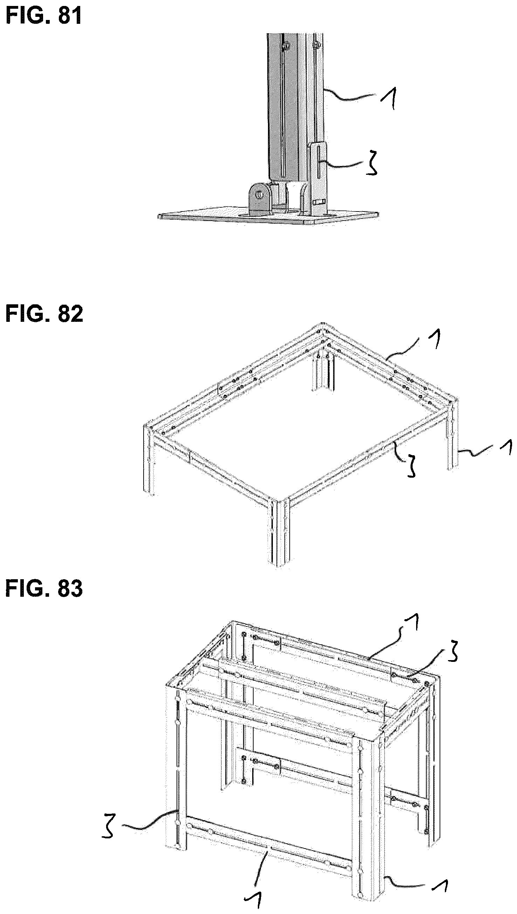

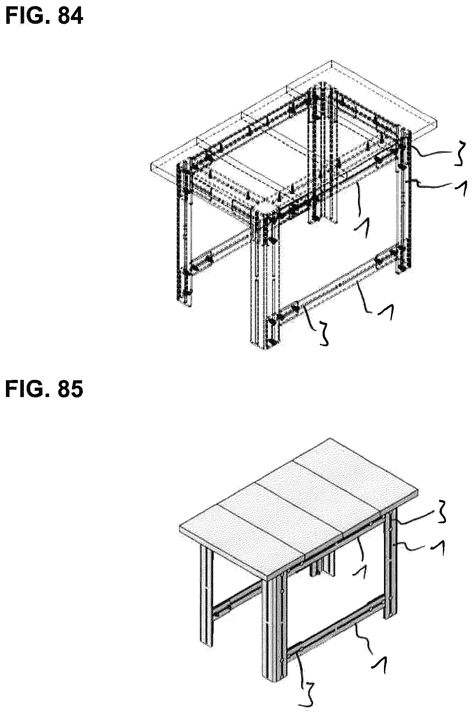

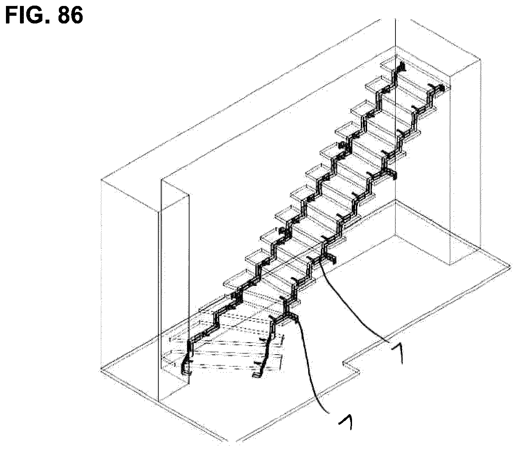

Die Figuren 13-69 zeigen weitere perspektivische Ansichten weiterer Verbindungselemente 1 bzw. Bauteile. Die Verbindungselemente 1 können unterschiedlich ausgestaltet sein und mehrere Metallteile/Arme 4, 5 mit Langlöchern 3 oder Durchbrüchen aufweisen. Aus den Verbindungselementen 1 bzw. Bauteilen können verschiedenartige Metallkonstruktionen gebildet werden, wie die Figuren 70-86 beispielhaft zeigen. Die Figuren zeigen beispielhafte Ausgestaltungen der Verbindungselemente 1 sowie der hieraus gebildeten Konstruktionen, wie z. B., aber nicht abschließend, Scharniere, Maste, gelenkige Masthalterungen/-füße, Gerüste, Treppen, Tische, Werktische, Wandtische, Unterbauten, Regalelemente/Wandelemente, Leitern, Brückenteile, Verankerungen, Terassenunterbauten/-rahmen oder Bettunterbauten/-rahmen, Podeste, Dachkonstruktionen. Hierfür und um noch flexibler einsetzbar zu sein, kann der erfindungsgemäße Bausatz weitere Teile umfassen, die in den Figuren beispielhaft dargestellt sind. Hierzu zählen beispielsweise Platten, Bretter, Verstrebungen oder Gelenke. Wie zu erkennen ist, bestehen die Metallkonstruktionen aus mehreren Verbindungselementen 1, die über in die Langlöcher 3 eingreifende Befestigungsmittel miteinander verbunden sind. Hierdurch können in einfacher Weise komplexe Metallgebilde errichtet werden.

Wesentlicher Vorteil des erfindungsgemäßen Bausatzes ist, dass dieser einfach zu versenden bzw. auch zu lagern ist und sich mit den Verbindungselementen 1 unterschiedliche Konstruktionen errichten lassen. Der Vorteil hierbei ist, dass der Bausatz z. B. zum Errichten eines Tisches genutzt werden kann und, wenn der Tisch nicht mehr benötigt wird, hieraus ein Regal oder dergleichen errichtbar ist. Es wird somit ein nachhaltiges Produkt bereitgestellt, das in unterschiedlichen Bereichen - ob privat oder gewerblich - von Nutzen ist.

## Patentansprüche

1. Bausatz zum Aufbau einer Metallkonstruktion mit mehreren Verbindungselementen (1), wobei die Verbindungselemente (1) mindestens ein Langloch (3) zur Durchführung mindestens eines Befestigungsmittels (2) aufweisen, wobei sich das Langloch (3) koaxial wenigstens über ein Drittel der Länge des Verbindungselementes (1) erstreckt und die Verbindungselemente (1) derart zueinander anordbar sind, dass ein Befestigungsmittel (2) durch mindestens zwei Langlöcher (3) zweier Verbindungselemente (1) ragt, so dass die Metallkonstruktion errichtbar ist.

2. Bausatz nach Anspruch 1, **dadurch gekennzeichnet, dass** die Verbindungselemente (1) zumindest teilweise eine rechteckige Form aufweisen.

3. Bausatz nach Anspruch 1, **dadurch gekennzeichnet, dass** die Verbindungselemente (1) eine rechteckige Form mit mindestens zwei hintereinander im Wesentlichen mittig vorliegenden separaten Langlöchern (3) aufweisen.

4. Bausatz nach einem der vorhergehenden Ansprüche, **dadurch gekennzeichnet, dass** die Verbindungselemente (1) aus zwei Armen (4, 5) bestehen, die in einem rechten Winkel zueinanderstehen.

5. Bausatz nach einem der Ansprüche 1 bis 3, **dadurch gekennzeichnet, dass** die Verbindungselemente (1) aus zwei Armen (4, 5) bestehen, die in einem Winkel zueinanderstehen, der über oder unter 90° liegt.

6. Bausatz nach einem der vorhergehenden Ansprüche, **dadurch gekennzeichnet, dass** in jedem der beiden Arme (4, 5) jeweils mindestens ein Langloch (3) und ein Langloch (3) oder ein Durchbruch vorliegt.

7. Bausatz nach einem der vorhergehenden Ansprüche, **dadurch gekennzeichnet, dass** die Verbindungselemente (1) aus Metall bestehen.

8. Bausatz nach einem der vorhergehenden Ansprüche, **dadurch gekennzeichnet, dass** die Verbindungselemente (1) eben oder geknickt ausgestaltet sind.

9. Bausatz nach Anspruch 8, **dadurch gekennzeichnet, dass** bei der geknickten Ausgestaltung zwei Flächen in einem Winkel von 90° zueinanderstehen.

10. Bausatz nach Anspruch 8, **dadurch gekennzeichnet, dass** bei der geknickten Ausgestaltung zwei Flächen in einem Winkel von mehr oder weniger als 90° zueinanderstehen.

11. Bausatz nach einem der vorhergehenden Ansprüche, **dadurch gekennzeichnet, dass** der Bausatz zumindest drei unterschiedlich gestaltete Verbindungselemente (1) umfasst.
